# EUROPÄISCHE PATENTSCHRIFT

(11) **EP 4 173 864 B1**
(45) Veröffentlichungstag und Bekanntmachung des Hinweises auf die Patenterteilung: **11.09.2024**
(21) Anmeldenummer: 22201624.8
(22) Anmeldetag: 14.10.2022
(51) Int. Cl.: B60K 1/04, B62D 21/15, B60R 3/00, B62D 21/02

(54) **SEITENVERKLEIDUNG UND CRASHSTRUKTUR FÜR ENERGIESPEICHER EINES KRAFTFAHRZEUGS**
SIDE TRIM AND CRASH STRUCTURE FOR AN ENERGY STORE OF A MOTOR VEHICLE
STRUCTURE DE REVÊTEMENT LATÉRAL ET DE COLLISION POUR ACCUMULATEUR D'ÉNERGIE D'UN VÉHICULE AUTOMOBILE

(30) Priorität: 25.10.2021 DE 102021127612
(43) Veröffentlichungstag der Anmeldung: 03.05.2023
(73) Patentinhaber: MAN Truck & Bus SE, 80995 München (DE)
(72) Erfinder: Schmitz, Andreas, 80995 München (DE); Wilke, Florian, 80995 München (DE); Kusch, Willi, 88239 Wangen im Allgäu (DE); Kondic, Darko, 80995 München (DE)
(74) Vertreter: v. Bezold & Partner Patentanwälte - PartG mbB

(56) Entgegenhaltungen:
- WO-A1-2020/160747
- DE-A1- 102018 121 227
- US-A1- 2014 117 716

## Beschreibung

Die Erfindung betrifft eine Vorrichtung mit Energiespeicher, Crashstruktur und Seitenverkleidung für ein Kraftfahrzeug, vorzugsweise ein Nutzfahrzeug.

Der Übergang von verbrennungsmotorisch angetriebenen Lastkraftwagen zu elektromotorisch angetriebenen Lastkraftwagen stellt die Hersteller vor vielfältige Herausforderungen. Ein besonderes Problem besteht in den hohen Stückkosten für die derzeit nur in sehr geringen Stückzahlen nachgefragten und hergestellten elektrisch angetriebenen Lastkraftwagen gegenüber den noch immer in sehr großen Mengen nachgefragten und hergestellten verbrennungsmotorisch angetriebenen Lastkraftwagen. Ein weiterer Problemkreis besteht in den hohen Entwicklungskosten für neue Lastkraftwagenteile und die Modifikation bestehender Lastkraftwagenteile zum Anpassen an Anforderungen der elektrisch angetriebenen Lastkraftwagen. Ein weiterer anderer Problemkreis besteht darin, dass in elektrisch angetriebenen Lastkraftwagen häufig Bauraumknappheit herrscht, da viele elektrische Komponenten, insbesondere des Hochvolt-Systems, vergleichsweise viel bzw. zusätzlichen Bauraum benötigen (z. B. Traktionsbatterie(n), Elektromotor(en), Bordladegerät, Ladesteckdose).

Die DE 10 2020 116 312 A1 offenbart beispielsweise ein Freizeitfahrzeug, bei dem ein hinteres Tragelement vorgesehen ist. In einem Rahmen des Freizeitfahrzeugs ist eine Energiespeichereinheit vorgesehen und das hintere Tragelement ist hinter dem Energiespeicher angeordnet. An dem hinteren Tragelement ist ein energieabsorbierendes Crashelement angeordnet.

DE 10 2018 121 227 A1 betrifft einen Lastkraftwagen aufweisend ein Energiebereitstellungsmodul. Das Energiebereitstellungsmodul weist einen Grundrahmen auf. An den Längsaußenseiten des Grundrahmens ist eine Crashstruktur angeordnet. Die Crashstruktur ist so ausgebildet, dass sie bei einem Seitenaufprall unter vorbestimmter plastischer Deformation eine Aufprallenergie absorbiert.

Der Erfindung liegt die Aufgabe zu Grunde, eine Anordnung mit Crashstruktur für ein Kraftfahrzeug zu schaffen, bei der die Crashstruktur einen Energiespeicher schützt und möglichst wenig zusätzlichen Bauraum benötigt, vorzugsweise bezüglich einer Querachse des Kraftfahrzeugs.

Die Aufgabe wird gelöst durch die Merkmale des unabhängigen Anspruchs 1. Vorteilhafte Weiterbildungen sind in den abhängigen Ansprüchen und der Beschreibung angegeben.

Ein Aspekt betrifft eine Vorrichtung für ein Kraftfahrzeug, vorzugsweise ein Nutzfahrzeug. Die Vorrichtung weist einen Energiespeicher, vorzugsweise eine Traktionsbatterie oder einen Kraftstofftank, auf. Die Vorrichtung weist eine Crashstruktur auf, die eine Außenseite des Energiespeichers (z. B. im Wesentlichen vollständig) schützend abdeckt, und vorzugsweise dazu ausgebildet ist, sich bei einem (z. B. Seiten-) Aufprall unter Energieabbau vorbestimmt zu verformen. Die Vorrichtung weist eine (z. B. im Wesentlichen plattenförmige) Seitenverkleidung auf, die eine dem Energiespeicher abgewandte Außenseite der Crashstruktur abdeckt. Die Seitenverkleidung weist eine Innenseite, die der Außenseite der Crashstruktur zugewandt ist, und eine Außenseite, die entgegengesetzt zur Innenseite der Seitenverkleidung ausgerichtet ist, auf. Die Innenseite der Seitenverkleidung ist zum Bilden eines Aufnahmeraums hin zu der Außenseite der Seitenverkleidung abschnittsweise zurückversetzt, vorzugsweise mit einer im (z. B. Quer- und/oder Längs-) Schnitt im Wesentlichen konkaven oder schalenartigen Kontur. Die Crashstruktur ist zumindest teilweise in dem Aufnahmeraum angeordnet.

Vorteilhaft ermöglicht die teilweise Anordnung der Crashstruktur in dem Aufnahmeraum, dass die Kombination von Crashstruktur und Seitenverkleidung zusammen möglichst wenig Bauraum benötigt. Die Crashstruktur und die Seitenverkleidung können sich quasi Bauraum teilen, ohne dass die jeweilige Funktion beeinträchtigt wird. Tatsächlich ermöglicht diese Technik eine vergleichsweise groß dimensionierte Crashstruktur, ohne dass hierfür besonders viel Bauraum benötigt wird. Die Crashstruktur kann zum Einsparen von zusätzlich benötigtem Bauraum einfach in den Aufnahmeraum eintauchen. Damit kann beispielsweise ebenfalls ermöglicht werden, den Energiespeicher unter Einhaltung etwaiger gesetzlicher Bestimmungen zur Maximalbreite des Kraftfahrzeugs möglichst groß zu dimensionieren, um eine möglichst große Reichweite für das Kraftfahrzeug zu ermöglichen. Nachfolgend sind besonders bevorzugte Varianten beschrieben, die die erwähnten Vorteile besonders wirkungsvoll ausnutzen können.

Vorzugsweise ist die Crashstruktur dazu ausgebildet, sich derart vorbestimmt zu verformen, dass die Crashstruktur nicht penetriert wird, eine Penetrierung erschwert und/oder sich flächig an einer hinter der Crashstruktur angeordneten Struktur (z. B. Gehäuse des Energiespeichers) abstützt. Beispielsweise kann die vorbestimmte Verformung derart sein, dass sich die Crashstruktur innerhalb ihres Bauraums in sich selbst verformt und dabei Crashenergie abbaut. Beispielsweise kann das vorbestimmte Verformen ein Eindrücken, ein Ausbeulen und/oder ein Verbiegen eines Profils und/oder einer Profilbahn der Crashstruktur aufweisen.

In einem Ausführungsbeispiel weist die Außenseite der Crashstruktur eine Profilierung auf, die zumindest teilweise in dem Aufnahmeraum angeordnet ist und/oder in den Aufnahmeraum eintaucht bzw. hineinragt.

In einem weiteren Ausführungsbeispiel weist ein oberer Abschnitt und/oder ein unterer Abschnitt der Seitenverkleidung eine Profilierung (z. B. zum Versteifen der Seitenverkleidung) auf, die einem Abschnitt der Profilierung der Crashstruktur gegenüberliegt. Der Abschnitt der Profilierung der Crashstruktur ist im Vergleich zu einer übrigen Profilierung der Crashstruktur abgeflacht. Vorzugsweise kann sich die Profilierung im oberen und unteren Bereich der Crashstruktur somit weniger stark erheben, so dass sie in den bei einem typischen Aufprall weniger mit Energie beaufschlagten Bereichen mehr Platz für die Struktur der Seitenvollverkleidung bietet. Es ist sogar möglich, dass auf diese Weise die Seitenverkleidung im Rahmen einer Gleichteilstrategie auch bei Kraftfahrzeugen ohne Crashstruktur verbaubar ist, da die Seitenverkleidung selbst genügend steif und im oberen und unteren Abschnitt gut anbindbar ist.

In einem weiteren Ausführungsbeispiel erstreckt sich der Aufnahmeraum im Wesentlichen entlang einer gesamten Länge der Seitenverkleidung und/oder der Crashstruktur. Alternativ oder zusätzlich erstreckt sich der Aufnahmeraum über mindestens 40 %, 50 %, 60 %, 70 % oder 80 % von einer Gesamthöhe der Seitenverkleidung.

In einer Ausführungsform ist die Crashstruktur als eine Crashbeplankung ausgeführt. Alternativ oder zusätzlich ist die Crashstruktur als ein Rollprofil, ein Strangprofil oder ein Pressteil ausgeführt. Alternativ oder zusätzlich ist die Crashstruktur an einem Gehäuse des Energiespeichers befestigt, vorzugsweise verschraubt.

Bevorzugt stützt sich die Crashstruktur zumindest abschnittsweise flächig an dem Energiespeicher ab, vorzugsweise mit Profiltälern einer Profilierung und/oder mehrerer Profilbahnen der Crashstruktur.

In einer weiteren Ausführungsform ist eine wirksame Breite der Crashstruktur in einem im Wesentlichen mittigen (z. B. streifenförmigen) Abschnitt der Crashstruktur am größten und fällt vorzugsweise nach oben und/oder nach unten hin ab (, wobei beispielsweise die wirksame Breite bezüglich einer Querachse der Crashstruktur senkrecht zu einer Ausrichtungsebene der Crashstruktur gemessen wird). Alternativ oder zusätzlich ist die Crashstruktur in einem im Wesentlichen mittigen Abschnitt der Crashstruktur gegenüber einem oberen Abschnitt der Crashstruktur und/oder einem unteren Abschnitt der Crashstruktur verstärkt und/oder verbreitert (z. B. gemessen bezüglich einer Querachse der Crashstruktur senkrecht zu einer Ausrichtungsebene der Crashstruktur). Wie bereits erwähnt, kann sich die Profilierung somit bevorzugt im oberen und unteren Bereich der Crashstruktur weniger stark erheben, so dass sie in den bei einem typischen Aufprall weniger mit Energie beaufschlagten Bereichen mehr Platz für die Struktur der Seitenvollverkleidung bietet.

In einer weiteren Ausführungsform weist die Crashstruktur (bzw. die Profilierung der Crashstruktur) mehrere Profilbahnen auf.

In einer Ausführungsvariante verlaufen die mehreren Profilbahnen parallel zueinander. Alternativ oder zusätzlich weisen die mehreren Profilbahnen einen U-förmigen, V-förmigen und/oder wellenförmigen Querschnitt auf. Alternativ oder zusätzlich sind die mehreren Profilbahnen parallel, schräg oder senkrecht zu einer Längsachse der Crashstruktur. Alternativ oder zusätzlich sind die mehreren Profilbahnen zumindest teilweise unterschiedlich breit bzw. hoch (z. B. gemessen bezüglich einer Querachse der Crashstruktur senkrecht zu einer Ausrichtungsebene der Crashstruktur).

In einer weiteren Ausführungsvariante ist eine obere Profilbahn der mehreren Profilbahnen weniger breit bzw. hoch als eine mittlere Profilbahn der mehreren Profilbahnen (z. B. gemessen bezüglich einer Querachse der Crashstruktur senkrecht zu einer Ausrichtungsebene der Crashstruktur). Alternativ oder zusätzlich fällt eine der Seitenverkleidung zugewandte Dachfläche einer oberen Profilbahn der mehreren Profilbahnen schräg ab, sodass eine (z. B. bezüglich einer Querachse der Crashstruktur senkrecht zu einer Ausrichtungsebene der Crashstruktur gemessene) Breite bzw. Höhe der oberen Profilbahn entlang einer Vertikalrichtung nach oben abnimmt.

In einer weiteren Ausführungsvariante ist eine untere Profilbahn der mehreren Profilbahnen weniger breit bzw. hoch als eine mittlere Profilbahn der mehreren Profilbahnen (z. B. gemessen bezüglich einer Querachse der Crashstruktur senkrecht zu einer Ausrichtungsebene der Crashstruktur). Alternativ oder zusätzlich fällt eine der Seitenverkleidung zugewandte Dachfläche einer unteren Profilbahn der mehreren Profilbahnen schräg ab, sodass eine (z. B. bezüglich einer Querachse der Crashstruktur senkrecht zu einer Ausrichtungsebene der Crashstruktur gemessene) Breite bzw. Höhe der unteren Profilbahn entlang einer Vertikalrichtung nach unten abnimmt.

In einem Ausführungsbeispiel ist eine mittlere Profilbahn der mehreren Profilbahnen die breiteste bzw. höchste der mehreren Profilbahnen (z. B. gemessen bezüglich einer Querachse der Crashstruktur senkrecht zu einer Ausrichtungsebene der Crashstruktur).

In einem weiteren Ausführungsbeispiel ist die Seitenverkleidung in einem oberen Abschnitt der Seitenverkleidung und/oder in einem unteren Abschnitt der Seitenverkleidung gegenüber einem mittigen Abschnitt der Seitenverkleidung verstärkt und/oder verbreitert (z. B. gemessen bezüglich einer Querachse der Crashstruktur senkrecht zu einer Ausrichtungsebene der Crashstruktur). Alternativ oder zusätzlich ist die Seitenverkleidung mehrschalig, und eine Innenschale der Seitenverkleidung ist in einem oberen Abschnitt der Innenschale und/oder in einem unteren Abschnitt der Innenschale gegenüber einem mittigen Abschnitt der Innenschale verstärkt und/oder verbreitert (z. B. gemessen bezüglich einer Querachse der Crashstruktur senkrecht zu einer Ausrichtungsebene der Crashstruktur).

Beispielsweise kann der obere Abschnitt der Seitenverkleidung und/oder der Innenschale direkt gegenüberliegend zu der oberen Profilbahn angeordnet sein.

Optional kann der mittige Abschnitt der Seitenverkleidung und/oder der Innenschale direkt gegenüberliegend zu der mittleren Profilbahn angeordnet sein.

Vorzugsweise kann der untere Abschnitt der Seitenverkleidung und/oder der Innenschale direkt gegenüberliegend zu der unteren Profilbahn angeordnet sein.

In einem weiteren Ausführungsbeispiel umgreift die Seitenverkleidung die Crashstruktur von unten, und/oder ist die Seitenverkleidung nach unten klappbar gelagert.

In einer Ausführungsform weist die Vorrichtung ferner eine, vorzugsweise bewegbare und/oder klappbare, Trittstufe zum Besteigen des Kraftfahrzeugs auf, wobei die Trittstufe in einer Aussparung der Seitenverkleidung und/oder einer Aussparung der Crashstruktur angeordnet ist. Vorteilhaft kann auf diese Weise eine besonders bauraumgünstige Anordnung der Trittstufe geschaffen werden.

Vorzugsweise kann eine Profilierung der Seitenverkleidung dort ausgeprägter bzw. verbreitert sein, wo direkt gegenüberliegend die Profilierung der Crashstruktur weniger ausgeprägt bzw. abgeflacht ist, und umgekehrt.

Gemäß einem weiteren Aspekt ist ein Kraftfahrzeug, vorzugsweise Nutzfahrzeug (z. B. Lastkraftwagen oder Omnibus), offenbart. Das Kraftfahrzeug weist eine Vorderachse, eine Hinterachse und einen Fahrzeugrahmen, vorzugsweise Leiterrahmen, auf. Das Kraftfahrzeug weist ferner eine Vorrichtung wie hierin offenbart auf, wobei die Vorrichtung zwischen der Vorderachse und der Hinterachse angeordnet und/oder an dem Fahrzeugrahmen befestigt ist, vorzugsweise auf einer Höhe mit der Vorderachse und der Hinterachse.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine perspektivische Rückansicht eines Kraftfahrzeugs gemäß einem Ausführungsbeispiel der vorliegenden Offenbarung;
- Figur 2: eine perspektivische Ansicht eines Abschnitts einer Längsaußenseite eines Kraftfahrzeugs;
- Figur 3: eine perspektivische Ansicht eines Abschnitts einer Längsaußenseite eines Kraftfahrzeugs ohne Seitenverkleidung;
- Figur 4: eine perspektivische Ansicht einer Vorrichtung für ein Kraftfahrzeug gemäß einem Ausführungsbeispiel der vorliegenden Offenbarung;
- Figur 5: eine Querschnittansicht einer Seitenverkleidung der Vorrichtung von Figur 4; und
- Figur 6: eine Querschnittansicht der Vorrichtung von Figur 4.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

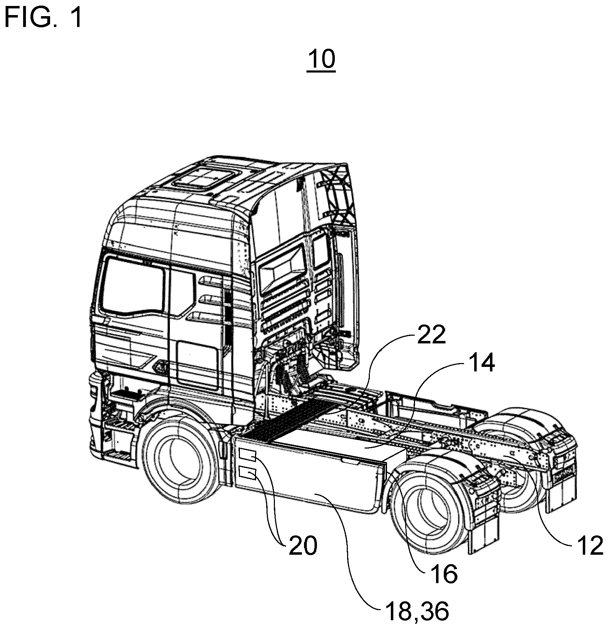

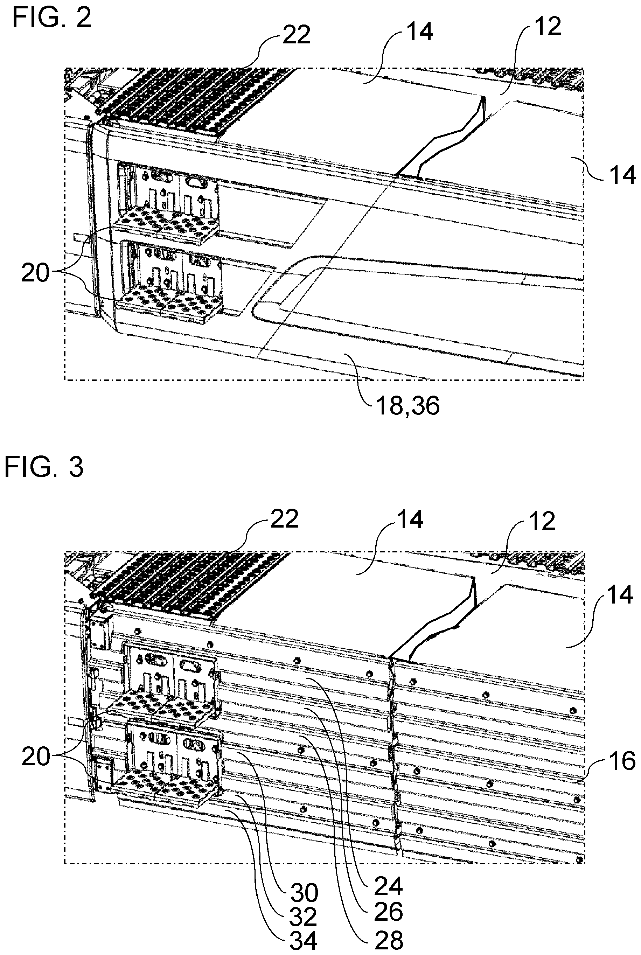

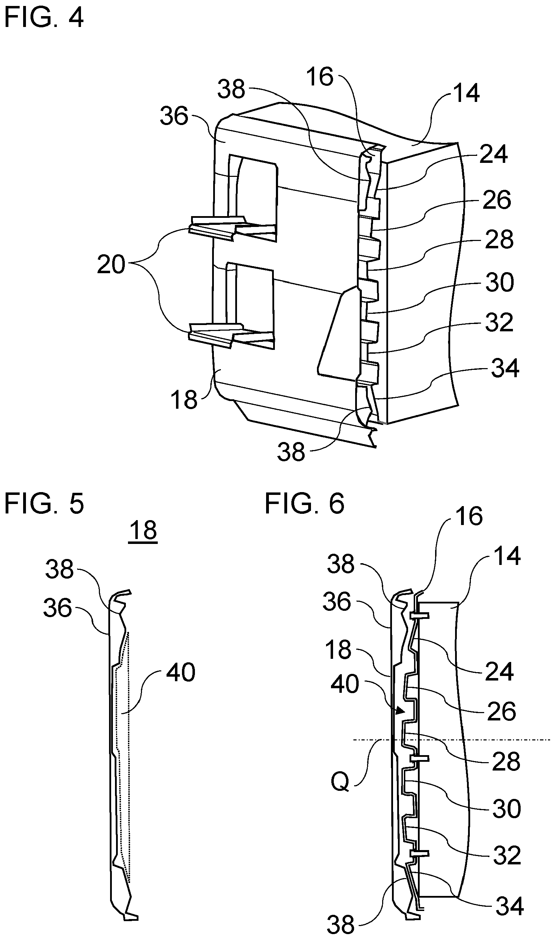

Die Figur 1 zeigt ein Kraftfahrzeug 10. Die Figuren 2, 3, 4 und 6 zeigen Ansichten eines Abschnitts des Kraftfahrzeugs 10, wobei in der Figur 3 eine Seitenverkleidung nicht dargestellt ist. Die Figur 5 zeigt lediglich die Seitenverkleidung.

Das Kraftfahrzeug 10 ist vorzugsweise als ein Lastkraftwagen ausgeführt, wie dargestellt ist. Der Lastkraftwagen kann beispielsweise einen Aufbau, z. B. Ladeaufbau, aufweisen (nicht in Figur 1 dargestellt). Alternativ kann der Lastkraftwagen beispielsweise eine Sattelkupplung zum Ankuppeln eines Sattelaufliegers aufweisen (nicht in Figur 1 dargestellt). Es ist möglich, dass das Kraftfahrzeug 10 beispielsweise als ein Omnibus, eine Baumaschine oder eine Landmaschine ausgebildet ist. Es ist auch möglich, dass das Kraftfahrzeug 10 nicht als Nutzfahrzeug ausgeführt ist, sondern beispielsweise als ein Personenkraftwagen (Pkw).

Das Kraftfahrzeug 10 kann einen Fahrzeugrahmen 12 aufweisen. Der Aufbau oder Sattelauflieger kann auf dem Fahrzeugrahmen 12 abgestützt sein. Der Fahrzeugrahmen 12 kann bevorzugt als ein Leiterrahmen ausgeführt sein, wenn das Kraftfahrzeug 10 beispielsweise als ein Lastkraftwagen ausgeführt ist. Der Leiterrahmen kann beispielsweise zwei im Wesentlichen parallele Hauptlängsträger aufweisen. Die beiden Hauptlängsträger können durch mehrere Querträger miteinander verbunden sein. Die mehreren Querträger können entlang einer Längsachse des Kraftfahrzeugs 10 voneinander beabstandet sein. Alternativ kann der Fahrzeugrahmen 12 beispielsweise als ein Gitterrahmen ausgeführt sein, z. B. bei einer Ausführung des Kraftfahrzeugs 10 als ein Lastkraftwagen oder ein Omnibus.

Das Kraftfahrzeug 10 ist bevorzugt elektrisch antreibbar. Beispielsweise kann das Kraftfahrzeug 10 mittels eines zentralen Elektroantriebs antreibbar sein. Der zentrale Elektroantrieb kann beispielsweise unterhalb des Fahrerhauses und/oder zwischen den beiden Hauptlängsträgern des Fahrzeugrahmens 12 angeordnet sein. Alternativ kann das Kraftfahrzeug 10 beispielsweise mittels mehrerer Elektroradnabenantriebe oder mehrerer radnaher Elektroantriebe angetrieben sein.

Das Kraftfahrzeug 10 weist einen Energiespeicher 14, eine Crashstruktur 16 und eine Seitenverkleidung 18 auf. Das Kraftfahrzeug 10 kann mindestens eine Trittstufe 20 und/oder eine Arbeitsplattform 22 aufweisen.

Der Energiespeicher 14 kann beispielsweise als ein Kraftstofftank (z. B. Drucktank) zum Speichern von Kraftstoff, z. B. Diesel, Benzin, Wasserstoff, Brenngas usw., ausgeführt sein. Der Kraftstofftank kann zum Zuführen des Kraftstoffs mit einer Antriebseinheit des Kraftfahrzeugs 10 verbunden sein. Bevorzugt ist der Energiespeicher 14 jedoch als eine Traktionsbatterie zum Speichern von elektrischer Energie ausgeführt. Die Traktionsbatterie kann beispielsweise extern über ein an einer Ladesteckdose des Kraftfahrzeugs 10 angeschlossenes elektrisches Ladekabel geladen werden. Die Traktionsbatterie kann mindestens einen elektrischen Antrieb des Kraftfahrzeugs 10 mit elektrischer Energie versorgen.

Der Energiespeicher 14 kann verdeckt hinter der Crashstruktur 16 und/oder der Seitenverkleidung 18 angeordnet sein. Der Energiespeicher 14 kann von der Crashstruktur 16 geschützt sein, z. B. bei einem Seitenaufprall auf die Crashstruktur 16 und/oder die Seitenverkleidung 18. Beispielsweise kann der Energiespeicher 14 (z. B. bezüglich einer Querachse des Kraftfahrzeugs 10) zwischen dem Fahrzeugrahmen 12 und der Crashstruktur 16 angeordnet sein. Der Energiespeicher 14 kann zwischen einer Vorderachse und einer Hinterachse des Kraftfahrzeugs 10 angeordnet sein.

Der Energiespeicher 14 kann an dem Fahrzeugrahmen 12 angebracht sein, vorzugsweise an einer Außenlängsseite eines der Hauptlängsträger des Fahrzeugrahmens 12. Die Seitenverkleidung 18 und/oder die Crashstruktur 16 kann an dem Energiespeicher 14 getragen bzw. angebracht sein, vorzugsweise an einer (z. B. Längs-) Seitenfläche des Energiespeichers 14, die weg von dem Fahrzeugrahmen 12 bzw. nach außen gerichtet ist. Die Crashstruktur 16 kann an einem Gehäuse des Energiespeichers 14 befestigt sein, z. B. mittels Verschraubung.

Die Crashstruktur 16 ist dazu ausgebildet, sich unter Energieabbau bei einem Aufprall vorbestimmt zu verformen, um Crashenergie abzubauen. Vorzugsweise kann die Crashstruktur 16 dazu ausgebildet sein, sich bei einem Seitenaufprall auf die Crashstruktur 16 und/oder die Seitenverkleidung 18 unter Energieabbau vorbestimmt plastisch zu verformen.

Die Crashstruktur 16 kann zwischen einer Vorderachse und einer Hinterachse des Kraftfahrzeugs 10 angeordnet sein. Die Crashstruktur 16 kann einen Abschnitt einer Längsseite (z. B. Fahrerlängsseite oder Beifahrerlängsseite) des Kraftfahrzeugs 10 vor Aufprallenergie schützend verkleiden. Die Crashstruktur 16 kann bezüglich einer Vorwärtsfahrtrichtung des Kraftfahrzeugs 10 hinter einem Kotflügel für die Vorderachse und/oder vor einem Kotflügel für die Hinterachse angeordnet sein.

Die Crashstruktur 16 schützt den Energiespeicher 14. Beispielsweise kann die Crashstruktur 16 an einer Außenlängsseite des Energiespeichers 14 angeordnet sein. Die Crashstruktur 16 kann eine Außenlängsseite des Energiespeichers 14 im Wesentlichen vollständig abdecken bzw. schützen. Vorzugsweise kann sich die Crashstruktur 16 im Wesentlichen über eine gesamte Höhe und/oder Länge (bezüglich einer Längsachse des Kraftfahrzeugs 10) des Energiespeichers 14 erstrecken. Die Crashstruktur 16 ist zwischen dem Energiespeichers 14 und der Seitenverkleidung 18 angeordnet.

Die Crashstruktur 16 kann sich im Wesentlichen parallel zu einer Längsachse des Kraftfahrzeugs 10 erstrecken. Vorzugsweise ist die Crashstruktur 16 auf Höhe einer Vorderachse, einer Hinterachse und/oder des Fahrzeugrahmens 12 des Kraftfahrzeugs 10 angeordnet. Vorteilhaft ist die Crashstruktur 16 vertikal ausgerichtet. Besonders bevorzugt liegt die Crashstruktur 16 in einer vertikalen Ausrichtungsebene, die beispielsweise parallel zu der Längsachse des Kraftfahrzeugs 10 verläuft und/oder senkrecht zur Querachse Q der Crashstruktur 16 angeordnet ist.

Die Crashstruktur 16 ist bevorzugt im Wesentlichen plattenförmig. Die Crashstruktur 16 kann als eine Crashbeplankung ausgeführt sein. Die Crashstruktur 16 kann bevorzugt als ein Rollprofil, ein Strangprofil oder ein Pressteil ausgeführt sein.

Die Crashstruktur 16 ist vorzugsweise profiliert. Beispielsweise kann die Crashstruktur 16 mehrere Profilbahnen 24, 26, 28, 30, 32, 34 aufweisen. Die Profilbahnen 24, 26, 28, 30, 32, 34 sind bevorzugt parallel zueinander. Die Profilbahnen 24, 26, 28, 30, 32, 34 können bevorzugt übereinander angeordnet sein. Die Profilbahnen 24, 26, 28, 30, 32, 34 können beispielsweise einen U-förmigen, V-förmigen oder wellenförmigen Querschnitt quer zu ihrer Längserstreckungsrichtung aufweisen. Die Profilbahnen 24, 26, 28, 30, 32, 34 können beispielsweise parallel zu einer Längsachse des Kraftfahrzeugs 10 bzw. der Crashstruktur 16 verlaufen. Alternativ können die Profilbahnen 24, 26, 28, 30, 32, 34 beispielsweise parallel zu einer Hochachse des Kraftfahrzeugs 10 bzw. der Crashstruktur 16 oder angeschrägt zu der Längsachse und der Hochachse (also beispielsweise diagonal) verlaufen. Es ist möglich, dass die Crashstruktur 16 mehr oder weniger als die sechs Profilbahnen 24, 26, 28, 30, 32, 34 aufweist, z. B. zwei, drei, vier, fünf, sieben, acht usw. Profilbahnen.

Die Profilbahnen 24, 26, 28, 30, 32, 34 können zumindest teilweise unterschiedlich breit sein, wobei eine Breite der Profilbahnen bezüglich einer Querachse Q (siehe Figur 6) der Crashstruktur 16 gemessen wird. Die Querachse Q ist senkrecht zur Ausrichtungsebene der Crashstruktur 16. Die oberste Profilbahn 24 kann weniger breit sein als die obere Profilbahn 26. Die obere Profilbahn 26 kann weniger breit sein als die mittlere Profilbahn 28. Die mittlere Profilbahn 28 kann beispielsweise ungefähr so breit sein wie die mittlere Profilbahn 30. Die mittlere Profilbahn 30 kann breiter sein als die untere Profilbahn 32. Die untere Profilbahn 32 kann breiter sein als die unterste Profilbahn 34.

Allgemein kann die Crashstruktur 16 in einem mittigen Abschnitt der Crashstruktur 16 gegenüber einem oberen Abschnitt der Crashstruktur 16 und/oder einem unteren Abschnitt der Crashstruktur 16 verstärkt und/oder verbreitert sein. Der obere Abschnitt kann die obere Profilbahn 24 und/oder 26 aufweisen. Der mittlere Abschnitt kann die mittlere Profilbahn 28 und/oder 30 aufweisen. Der untere Abschnitt kann die untere Profilbahn 32 und/oder 34 aufweisen. Der mittige Abschnitt kann zwischen dem oberen Abschnitt und dem unteren Abschnitt angeordnet sein.

Allgemein kann in einer Vertikalrichtung nach unten und/oder nach oben hin ausgehend von einem mittigen Abschnitt der Crashstruktur 16 eine wirksame Breite und/oder Profilierung der Crashstruktur 16 abnehmen. Eine wirksame Breite und/oder Profilierung der Crashstruktur 16 kann in einem mittigen Abschnitt am größten sein. Die wirksame Breite kann sich auf die jeweilige Maximalbreite der Profilbahn(en) im jeweiligen Abschnitt der Crashstruktur 16 beziehen. Beispielsweise sind die mittleren Profilbahnen 28, 30 stärker profiliert als die obigen Profilbahnen 24, 26 und/oder die unteren Profilbahnen 32, 34.

Die Dachflächen der Profilbahnen 24, 26, 28, 30, 32, 34 können der Seitenverkleidung 18 zugewandt sein. Die Dachfläche der oberen Profilbahn 24 und/oder 26 kann schräg abfallen, sodass die Breite der oberen Profilbahn 24 und/oder 26 in einer Vertikalrichtung nach oben abnimmt. Die Dachfläche der mittleren Profilbahn 28 und/oder 30 kann eine im Wesentlichen gleichbleibende Breite aufweisen und vorzugsweise vertikal ausgerichtet sein. Die Dachfläche der unteren Profilbahn 32 und/oder 34 kann schräg abfallen, sodass die Breite der unteren Profilbahn 32 und/oder 34 in einer Vertikalrichtung nach unten abnimmt.

Die Seitenverkleidung 18 verkleidet eine Außenseite der Crashstruktur 16 und damit vorzugsweise ebenfalls eine Außenseite des Energiespeichers 14. Die Seitenverkleidung 18 kann zwischen einer Vorderachse und einer Hinterachse des Kraftfahrzeugs 10 angeordnet sein. Die Seitenverkleidung 18 kann einen Abschnitt einer Längsseite (z. B. Fahrerlängsseite oder Beifahrerlängsseite) des Kraftfahrzeugs 10 verkleiden. Vorzugsweise verkleidet die Seitenverkleidung 18 im Wesentlichen einen gesamten Abschnitt der Längsseite des Kraftfahrzeugs 10 zwischen der Vorderachse und der Hinterachse. Beispielsweise ist die Seitenverkleidung 18 als eine Seitenvollverkleidung ausgeführt.

Die Seitenverkleidung 18 kann bezüglich einer Vorwärtsfahrtrichtung des Kraftfahrzeugs 10 hinter einem Kotflügel für die Vorderachse und/oder vor einem Kotflügel für die Hinterachse angeordnet sein.

Die Seitenverkleidung 18 kann sich im Wesentlichen parallel zu einer Längsachse des Kraftfahrzeugs 10 erstrecken. Vorzugsweise ist die Seitenverkleidung 18 auf Höhe einer Vorderachse, einer Hinterachse, der Crashstruktur 16, des Energiespeichers 14 und/oder des Fahrzeugrahmens 12 angeordnet. Bevorzugt ist die Seitenverkleidung 18 plattenförmig. Vorteilhaft ist die Seitenverkleidung 18 vertikal ausgerichtet.

Vorzugsweise kann die Seitenverkleidung 18 die Crashstruktur 16 von unten umgreifen. Es ist möglich, dass die Seitenverkleidung 18 nach unten klappbar bzw. schwenkbar ist, z. B. um einen Zugang zu der Crashstruktur 16 und/oder des Energiespeichers 14 freizugeben.

Eine Form einer der Crashstruktur 16 zugewandten Innenseite der Seitenverkleidung 18 und eine Form einer der Seitenverkleidung 18 zugewandten Außenseite der Crashstruktur 16 können aneinander angepasst sein. Im Einzelnen ist die Innenseite der Seitenverkleidung 18 zum Bilden eines Aufnahmeraums 40 hin zu der Außenseite der Seitenverkleidung 18 abschnittsweise zurückversetzt bzw. vertieft (siehe insbesondere Figuren 5 und 6). Die Innenseite der Seitenverkleidung 18 kann dabei im Schnitt bevorzugt eine im Wesentlichen konkave oder schalenartige Kontur aufweisen. Die Crashstruktur 16 ist zumindest teilweise innerhalb des Aufnahmeraums 40 angeordnet.

Der Aufnahmeraum 40 kann sich im Wesentlichen entlang einer gesamten Länge der Seitenverkleidung 18 und/oder der Crashstruktur 16 erstrecken. Der Aufnahmeraum 40 kann ungefähr mittig bezüglich einer Hochachse der Seitenverkleidung 18 angeordnet sein. Beispielsweise kann sich der Aufnahmeraum 40 über mindestens 40 %, 50 %, 60 %, 70 % oder 80 % von einer Gesamthöhe der Seitenverkleidung 18 erstrecken.

Wie erwähnt, weist die Außenseite der Crashstruktur 16 bevorzugt eine Profilierung mit den Profilbahnen 24, 26, 28, 30, 32, 34 auf. Diese Profilierung kann zumindest teilweise in dem Aufnahmeraum 40 angeordnet sein und/oder in den Aufnahmeraum 40 eintauchen. Die Seitenverkleidung 18 kann sich an wenigstens einer der Profilbahnen 24, 26, 28, 30, 32, 34 abstützen, z. B. an einer Dachfläche oder einer Talfläche der jeweiligen Profilbahn 24, 26, 28, 30, 32, 34.

Ein oberer Abschnitt und ein unterer Abschnitt der Seitenverkleidung 18 kann ebenfalls eine Profilierung zum Versteifen der Seitenverkleidung 18 aufweisen. Diese Abschnitte können einem jeweiligen Abschnitt der Profilierung der Crashstruktur 16 direkt gegenüberliegen. Der jeweilige Abschnitt der Profilierung der Crashstruktur 16 kann vorzugsweise abgeflacht sein, um Bauraum für die Profilierung der Seitenverkleidung 18 im oberen und/oder unteren Abschnitt der Seitenverkleidung 18 zu schaffen. Allgemein kann die Profilierung der Seitenverkleidung 18 dort ausgeprägter bzw. verbreitert sein, wo direkt gegenüberliegend die Profilierung der Crashstruktur 16 weniger ausgeprägt bzw. abgeflacht ist, und umgekehrt.

In einem oberen Abschnitt der Seitenverkleidung 18 kann die Seitenverkleidung 18 gegenüber einem mittigen Abschnitt der Seitenverkleidung 18 verstärkt und/oder verbreitert sein, gemessen bezüglich der Querachse Q. Der obere Abschnitt kann auf Höhe der oberen Profilbahn 24 angeordnet sein. Ein Profil des oberen Abschnitts kann einem Profil der oberen Profilbahn 24 zumindest abschnittsweise folgen.

In einem unteren Abschnitt der Seitenverkleidung 18 kann die Seitenverkleidung 18 gegenüber einem mittigen Abschnitt der Seitenverkleidung 18 verstärkt und/oder verbreitert sein, gemessen bezüglich der Querachse Q. Der untere Abschnitt kann auf Höhe der unteren Profilbahn 34 angeordnet sein. Ein Profil des unteren Abschnitts kann einem Profil der unteren Profilbahn 34 zumindest abschnittsweise folgen.

Die Seitenverkleidung 18 kann mehrschalig, vorzugsweise zweischalig, sein. Die Seitenverkleidung 18 kann eine Außenschale 36, die nach außen gewandt ist, aufweisen. Die Seitenverkleidung 18 kann eine Innenschale 38 aufweisen, die zu der Crashstruktur 16 gerichtet ist. Die Innenschale 38 kann eine Steifigkeit der Seitenverkleidung 18 erhöhen. Vorzugsweise kann die Innenschale 38 in einem oberen Abschnitt der Innenschale 38 und/oder in einem unteren Abschnitt der Innenschale 38 verstärkt und/oder verbreitert sein, vorzugsweise im Vergleich zu einem mittigen Abschnitt der Innenschale 38. Die Verstärkung und/oder Verbreiterung kann die Steifigkeit der Seitenverkleidung 18 erhöhen. Wie erwähnt, kann eine Form der Außenseite der Crashstruktur 16 an eine Formgebung der Innenschale 38 angepasst sein (z. B. unterschiedlich hohe Profilbahnen, schräg abfallende Dachflächen usw.).

Mittels der Trittstufe 20 kann das Kraftfahrzeug 10 bestiegen werden. Die Trittstufe 20 kann in der Crashstruktur 16 und der Seitenverkleidung 18 angeordnet sein. Die Trittstufe 20 kann zwischen einer Gebrauchsstellung und einer Nichtgebrauchsstellung bewegbar sein. Die Figur 1 zeigt die Trittstufe 20 schematisch in der Nichtgebrauchsstellung. Die Figuren 2 bis 4 zeigen die Trittstufe 20 in der Gebrauchsstellung.

In der Gebrauchsstellung kann die Trittstufe 20 begehbar sein. In der Gebrauchsstellung kann die Trittstufe 20 zum Besteigen des Kraftfahrzeugs 10 genutzt werden. Die Trittstufe 20 kann in der Gebrauchsstellung im Wesentlichen horizontal ausgerichtet sein.

In der Nichtgebrauchsstellung kann die Trittstufe 20 vorzugsweise nicht begehbar sein. In der Nichtgebrauchsstellung kann die Trittstufe 20 bei bestimmungsgemäßen Gebrauch nicht zum Besteigen des Kraftfahrzeugs 10 genutzt werden. Die Trittstufe 20 kann in der Nichtgebrauchsstellung im Wesentlichen vertikal ausgerichtet sein.

Beispielsweise kann die Trittstufe 20 zwischen der Gebrauchsstellung und der Nichtgebrauchsstellung verschwenkt bzw. geklappt und/oder verschoben werden. Vorzugsweise kann die Trittstufe 20 aus der Nichtgebrauchsstellung in die Gebrauchsstellung ausgeklappt werden, bevorzugt nach unten. Vorzugsweise kann die Trittstufe 20 aus der Gebrauchsstellung in die Nichtgebrauchsstellung eingeklappt werden, bevorzugt nach oben. Beispielsweise kann eine Schwenkachse der Trittstufe 20 im Wesentlichen parallel zu einer Längsachse des Kraftfahrzeugs 10 sein.

Die Trittstufe 20 kann vorzugsweise ein Blechbauteil sein. Bevorzugt weist die Trittstufe 20 eine profilierte Trittfläche auf, um beispielsweise ein Abrutschen von der Trittfläche zu verhindern.

Die Trittstufe 20 kann in mindestens einer Aussparung der Seitenverkleidung 18 und/oder mindestens einer Aussparung der Crashstruktur 16 angeordnet sein. Die Aussparungen können beispielsweise jeweils als ein Ausschnitt und/oder eine Öffnung, vorzugsweise Durchgangsöffnung, ausgeführt sein. Die Aussparungen sind bevorzugt rechteckförmig. Bevorzugt kann die Aussparung der Crashstruktur 16 und/oder der Seitenverkleidung 18 die Trittstufe 20 in der Nichtgebrauchsstellung einrahmen.

In der Nichtgebrauchsstellung kann die Trittstufe 20 bevorzugt die Aussparung der Crashstruktur 16 füllen. In der Nichtgebrauchsstellung kann die Trittstufe 20 in einer Ebene mit der Aussparung der Crashstruktur 16 liegen. Die Ebene ist bevorzugt eine Vertikalebene, besonders bevorzugt eine Vertikallängsebene des Kraftfahrzeugs 10. Die Trittstufe 20 kann eine Schwächung der Crashstruktur 16 im Bereich der Aussparung der Crashstruktur 16 verringern oder sogar überkompensieren. Die Trittstufe 20 kann die Crashstruktur 16 im Bereich der Aussparung der Crashstruktur 16 verstärken und/oder versteifen. Die Verstärkung und/oder Versteifung können in der Nichtgebrauchsstellung und optional zusätzlich in der Gebrauchsstellung der Trittstufe 20 bewirkt sein. In der Nichtgebrauchsstellung kann die Trittstufe 20 die Funktion einer (zusätzlichen) Crashstruktur innerhalb der Crashstruktur 16 bzw. in der Aussparung der Crashstruktur 16 übernehmen.

Die Trittstufe 20 kann durch die Aussparung der Seitenverkleidung 18 hindurch bewegbar sein. In der Nichtgebrauchsstellung kann die Trittstufe 20 bezüglich der Seitenverkleidung 18 zurückversetzt oder im Wesentlich bündig mit der Seitenverkleidung 18 sein. In der Gebrauchsstellung kann die Trittstufe 20 über die Seitenverkleidung 18 hinaus überstehen bzw. aus der Aussparung der Seitenverkleidung 18 herausstehen.

Die Arbeitsplattform 22 kann mittels der Trittstufe 20 erreichbar sein. Zum Besteigen der Arbeitsplattform 22 kann die Trittstufe 20 in die Gebrauchsstellung bewegt werden.

Die Arbeitsplattform 22 kann bezüglich einer Vorwärtsfahrtrichtung des Kraftfahrzeugs 10 hinter einem Fahrerhaus des Kraftfahrzeugs 10 angeordnet sein, vorzugsweise angrenzend an eine Rückwand des Fahrerhauses. Die Arbeitsplattform 22 kann oberhalb von dem Fahrzeugrahmen 12 angeordnet sein, zweckmäßig direkt oberhalb des Fahrzeugrahmens 12. Vorzugsweise kann die Arbeitsplattform 22 auf dem Fahrzeugrahmen 12 abgestützt sein. Die Arbeitsplattform 22 kann zwischen einer Vorderachse und einer Hinterachse des Kraftfahrzeugs 10 angeordnet sein. Die Arbeitsplattform 22 kann, vorzugsweise direkt, oberhalb von der Trittstufe 20, der Crashstruktur 16, des Energiespeichers 14 und/oder der Seitenverkleidung 18 angeordnet sein.

Bei Begehung der Arbeitsplattform 22 können beispielsweise fahrerhausrückseitige Anschlüsse des Kraftfahrzeugs 10 und/oder frontseitige Anschlüsse eines Anhängers oder Aufliegers des Kraftfahrzeugs 10 zugänglich sein. Die Arbeitsplattform 22 kann beispielsweise eine Rechteckform aufweisen. Die Arbeitsplattform 22 ist vorzugsweise horizontal ausgerichtet.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls in den Schutzbereich (ausschließlich durch die beigefügten Ansprüche definiert) fallen.

### Bezugszeichenliste

- 10: Kraftfahrzeug
- 12: Fahrzeugrahmen
- 14: Energiespeicher
- 16: Crashstruktur
- 18: Seitenverkleidung
- 20: Trittstufe
- 22: Arbeitsplattform
- 24: Profilbahn
- 26: Profilbahn
- 28: Profilbahn
- 30: Profilbahn
- 32: Profilbahn
- 34: Profilbahn
- 36: Außenschale
- 38: Innenschale
- 40: Aufnahmeraum

- Q: Querachse

## Patentansprüche

1. Vorrichtung für ein Kraftfahrzeug (10), vorzugsweise ein Nutzfahrzeug, aufweisend:
einen Energiespeicher (14), vorzugsweise eine Traktionsbatterie oder einen Kraftstofftank;
eine Crashstruktur (16), die eine Außenseite des Energiespeichers (14) schützend abdeckt und dazu ausgebildet ist, sich bei einem Aufprall unter Energieabbau vorbestimmt zu verformen; **dadurch gekennzeichnet, dass** die Vorrichtung weiterhin umfasst:
eine Seitenverkleidung (18), die eine dem Energiespeicher (14) abgewandte Außenseite der Crashstruktur (16) abdeckt,
wobei:
die Seitenverkleidung (18) eine Innenseite, die der Außenseite der Crashstruktur (16) zugewandt ist, und eine Außenseite, die entgegengesetzt zur Innenseite der Seitenverkleidung (18) ausgerichtet ist, aufweist;
die Innenseite der Seitenverkleidung (18) zum Bilden eines Aufnahmeraums (40) hin zu der Außenseite der Seitenverkleidung (18) abschnittsweise zurückversetzt ist, vorzugsweise mit einer im Schnitt im Wesentlichen konkaven oder schalenartigen Kontur; und
die Crashstruktur (16) zumindest teilweise in dem Aufnahmeraum (40) angeordnet ist.

2. Vorrichtung nach Anspruch 1, wobei:
die Außenseite der Crashstruktur (16) eine Profilierung aufweist, die zumindest teilweise in dem Aufnahmeraum (40) angeordnet ist und/oder in den Aufnahmeraum (40) eintaucht.

3. Vorrichtung nach Anspruch 2, wobei:
ein oberer Abschnitt und/oder ein unterer Abschnitt der Seitenverkleidung (18) eine Profilierung aufweist, die einem Abschnitt der Profilierung der Crashstruktur (16) gegenüberliegt, und
der Abschnitt der Profilierung der Crashstruktur (16) im Vergleich zu einer übrigen Profilierung der Crashstruktur (16) abgeflacht ist.

4. Vorrichtung nach Anspruch 1 oder Anspruch 2, wobei:
der Aufnahmeraum (40) sich im Wesentlichen entlang einer gesamten Länge der Seitenverkleidung (18) und/oder der Crashstruktur (16) erstreckt; und/oder
der Aufnahmeraum (40) sich über mindestens 40 %, 50 %, 60 %, 70 % oder 80 % von einer Gesamthöhe der Seitenverkleidung (18) erstreckt.

5. Vorrichtung nach Anspruch 1, wobei:
die Crashstruktur (16) als eine Crashbeplankung ausgeführt ist; und/oder
die Crashstruktur (16) als ein Rollprofil, ein Strangprofil oder ein Pressteil ausgeführt ist; und/oder
die Crashstruktur (16) an einem Gehäuse des Energiespeichers (14) befestigt, vorzugsweise verschraubt, ist.

6. Vorrichtung nach einem der vorherigen Ansprüche, wobei:
eine wirksame Breite der Crashstruktur (16) in einem im Wesentlichen mittigen Abschnitt der Crashstruktur (16) am größten ist und vorzugsweise nach oben und/oder nach unten hin abfällt; und/oder
die Crashstruktur (16) in einem im Wesentlichen mittigen Abschnitt der Crashstruktur (16) gegenüber einem oberen Abschnitt der Crashstruktur (16) und/oder einem unteren Abschnitt der Crashstruktur (16) verstärkt und/oder verbreitert ist.

7. Vorrichtung nach einem der vorherigen Ansprüche, wobei:
die Crashstruktur (16) mehrere Profilbahnen (24, 26, 28, 30, 32, 34) aufweist.

8. Vorrichtung nach Anspruch 7, wobei mindestens eines der nachfolgenden Merkmale erfüllt ist:
die mehreren Profilbahnen (24, 26, 28, 30, 32, 34) verlaufen parallel zueinander;
die mehreren Profilbahnen (24, 26, 28, 30, 32, 34) weisen einen U-förmigen, V-förmigen oder wellenförmigen Querschnitt auf;
die mehreren Profilbahnen (24, 26, 28, 30, 32, 34) sind parallel, schräg oder senkrecht zu einer Längsachse der Crashstruktur (16); und
die mehreren Profilbahnen (24, 26, 28, 30, 32, 34) sind zumindest teilweise unterschiedlich breit.

9. Vorrichtung nach Anspruch 7 oder Anspruch 8, wobei:
eine obere Profilbahn (24, 26) der mehreren Profilbahnen (24, 26, 28, 30, 32, 34) weniger breit ist als eine mittlere Profilbahn (28, 30) der mehreren Profilbahnen (24, 26, 28, 30, 32, 34); und/oder
eine der Seitenverkleidung (18) zugewandte Dachfläche einer oberen Profilbahn (24, 26) der mehreren Profilbahnen (24, 26, 28, 30, 32, 34) schräg abfällt, sodass eine Breite der oberen Profilbahn (24, 26) entlang einer Vertikalrichtung nach oben abnimmt.

10. Vorrichtung nach einem der Ansprüche 7 bis 9, wobei:
eine untere Profilbahn (32, 34) der mehreren Profilbahnen (24, 26, 28, 30, 32, 34) weniger breit ist als eine mittlere Profilbahn (28, 30) der mehreren Profilbahnen (24, 26, 28, 30, 32, 34); und/oder
eine der Seitenverkleidung (18) zugewandte Dachfläche einer unteren Profilbahn (32, 34) der mehreren Profilbahnen (24, 26, 28, 30, 32, 34) schräg abfällt, sodass eine Breite der unteren Profilbahn (32, 34) entlang einer Vertikalrichtung nach unten abnimmt.

11. Vorrichtung nach einem der Ansprüche 7 bis 10, wobei:
eine mittlere Profilbahn (28, 30) der mehreren Profilbahnen (24, 26, 28, 30, 32, 34) die breiteste der mehreren Profilbahnen (24, 26, 28, 30, 32, 34) ist.

12. Vorrichtung nach einem der vorherigen Ansprüche, wobei:
die Seitenverkleidung (18) in einem oberen Abschnitt der Seitenverkleidung (18) und/oder in einem unteren Abschnitt der Seitenverkleidung (18) gegenüber einem mittigen Abschnitt der Seitenverkleidung (18) verstärkt und/oder verbreitert ist; und/oder
die Seitenverkleidung (18) mehrschalig ist, und eine Innenschale (38) der Seitenverkleidung (18) in einem oberen Abschnitt der Innenschale (38) und/oder in einem unteren Abschnitt der Innenschale (38) gegenüber einem mittigen Abschnitt der Innenschale (38) verstärkt und/oder verbreitert ist.

13. Vorrichtung nach einem der vorherigen Ansprüche, wobei:
die Seitenverkleidung (18) die Crashstruktur (16) von unten umgreift; und/oder
die Seitenverkleidung (18) nach unten klappbar gelagert ist.

14. Vorrichtung nach einem der vorherigen Ansprüche, ferner aufweisend:
eine, vorzugsweise bewegbare und/oder klappbare, Trittstufe (20) zum Besteigen des Kraftfahrzeugs (10), wobei die Trittstufe (20) in einer Aussparung der Seitenverkleidung (18) und/oder einer Aussparung der Crashstruktur (16) angeordnet ist.

15. Kraftfahrzeug (10), vorzugsweise Nutzfahrzeug, aufweisend:
eine Vorderachse;
eine Hinterachse;
einen Fahrzeugrahmen (12), vorzugsweise Leiterrahmen; und
eine Vorrichtung nach einem der vorherigen Ansprüche, wobei die Vorrichtung zwischen der Vorderachse und der Hinterachse angeordnet und/oder an dem Fahrzeugrahmen (12) befestigt ist, vorzugsweise auf einer Höhe mit der Vorderachse und der Hinterachse.

## Claims

1. A device for a motor vehicle (10), preferably a utility vehicle, comprising:
an energy storage device (14), preferably a traction battery or a fuel tank;
a crash structure (16) which covers an outer side of the energy storage device (14) in a protective manner and is configured to deform in a predetermined manner in the event of a collision while dissipating energy;
**characterized in that** the device further comprises:
a side panelling (18) which covers an outer side of the crash structure (16) facing away from the energy storage device (14),
wherein:
the side panelling (18) comprises an inner side facing the outer side of the crash structure (16) and an outer side facing opposite to the inner side of the side panelling (18);
the inner side of the side panelling (18) is set back in sections towards the outer side of the side panelling (18) to form a receiving space (40), preferably with a substantially concave or shell-like contour in cross-section; and
the crash structure (16) is arranged at least partially in the receiving space (40).

2. The device according to claim 1, wherein:
the outer side of the crash structure (16) comprises a profiling which is at least partially arranged in the receiving space (40) and/or dips into the receiving space (40).

3. The device according to claim 2, wherein:
an upper section and/or a lower section of the side panelling (18) comprises a profiling which faces a section of the profiling of the crash structure (16), and
the section of the profiling of the crash structure (16) is flattened compared to a remaining profiling of the crash structure (16).

4. The device according to claim 1 or claim 2, wherein:
the receiving space (40) extends substantially along an entire length of the side panelling (18) and/or the crash structure (16); and/or
the receiving space (40) extends over at least 40 %, 50 %, 60 %, 70 % or 80 % of a total height of the side panelling (18).

5. The device according to claim 1, wherein:
the crash structure (16) is configured as a crash planking; and/or
the crash structure (16) is configured as a rolled profile, an extruded profile or a moulded part; and/or
the crash structure (16) is fastened, preferably screwed, to a housing of the energy storage device (14).

6. The device according to one of the previous claims, wherein:
an effective width of the crash structure (16) is largest in a substantially central section of the crash structure (16) and preferably slopes upwards and/or downwards; and/or
the crash structure (16) is reinforced and/or widened in a substantially central section of the crash structure (16) relative to an upper section of the crash structure (16) and/or a lower section of the crash structure (16).

7. The device according to one of the previous claims, wherein:
the crash structure (16) comprises a plurality of profile webs (24, 26, 28, 30, 32, 34).

8. The device according to claim 7, wherein at least one of the following features is fulfilled:
the plurality of profile webs (24, 26, 28, 30, 32, 34) extend parallel to each other;
the plurality of profile webs (24, 26, 28, 30, 32, 34) comprise a U-shaped, V-shaped or wave-shaped cross-section;
the plurality of profile webs (24, 26, 28, 30, 32, 34) are parallel, oblique or perpendicular to a longitudinal axis of the crash structure (16); and
the plurality of profile webs (24, 26, 28, 30, 32, 34) are at least partially of different widths.

9. The device according to claim 7 or claim 8, wherein:
an upper profile web (24, 26) of the plurality of profile webs (24, 26, 28, 30, 32, 34) is less wide than a middle profile web (28, 30) of the plurality of profile webs (24, 26, 28, 30, 32, 34); and/or
a roof face of an upper profile web (24, 26) of the plurality of profile webs (24, 26, 28, 30, 32, 34) facing the side panelling (18) slopes obliquely, so that a width of the upper profile web (24, 26) decreases along a vertical direction upwards.

10. The device according to any one of claims 7 to 9, wherein:
a lower profile web (32, 34) of the plurality of profile webs (24, 26, 28, 30, 32, 34) is less wide than a centre profile web (28, 30) of the plurality of profile webs (24, 26, 28, 30, 32, 34); and/or
a roof face of a lower profile web (32, 34) of the plurality of profile webs (24, 26, 28, 30, 32, 34) facing the side panelling (18) slopes obliquely, so that a width of the lower profile web (32, 34) decreases along a vertical direction downwards.

11. The device according to any one of claims 7 to 10, wherein:
a centre profile web (28, 30) of the plurality of profile webs (24, 26, 28, 30, 32, 34) is the widest of the plurality of profile webs (24, 26, 28, 30, 32, 34).

12. The device according to any of the previous claims, wherein:
the side panelling (18) is reinforced and/or widened in an upper section of the side panelling (18) and/or in a lower section of the side panelling (18) relative to a central section of the side panelling (18); and/or
the side panelling (18) is multi-shell, and an inner shell (38) of the side panelling (18) is reinforced and/or widened in an upper section of the inner shell (38) and/or in a lower section of the inner shell (38) relative to a central section of the inner shell (38).

13. The device according to one of the previous claims, wherein:
the side panelling (18) embraces the crash structure (16) from below; and/or
the side panelling (18) is supported in a downwardly hinged manner.

14. The device according to one of the previous claims, further comprising:
a, preferably movable and/or foldable, step (20) for boarding the motor vehicle (10), wherein the step (20) is arranged in a recess of the side panelling (18) and/or a recess of the crash structure (16).

15. A motor vehicle (10), preferably utility vehicle, comprising:
a front axle;
a rear axle;
a vehicle frame (12), preferably a ladder frame; and
a device according to one of the previous claims, wherein the device is arranged between the front axle and the rear axle and/or fastened to the vehicle frame (12), preferably at a level with the front axle and the rear axle.

## Revendications

1. Dispositif pour un véhicule automobile (10), de préférence un véhicule utilitaire, comprenant :
une réserve d'énergie (14), de préférence une batterie de traction ou un réservoir de carburant ;
une structure (16) pour situation de collision, ou "structure de crash" ("*Crashstruktur"* en allemand), qui recouvre un côté extérieur de la réserve d'énergie (14) en le protégeant et qui est conçue pour se déformer de manière prédéterminée en cas de collision en dissipant l'énergie ; **caractérisé en ce que** le dispositif comprend en outre :
un panneau latéral (18) qui recouvre une face extérieure de la structure de crash (16) opposée à la réserve d'énergie (14),
dans lequel :
le panneau latéral (18) présente un côté intérieur qui est tourné vers le côté extérieur de la structure de crash (16) et un côté extérieur qui est à l'opposé du côté intérieur du panneau latéral (18) ;
le côté intérieur du panneau latéral (18) est au moins partiellement en retrait par rapport au côté extérieur du panneau latéral (18) pour former un espace de réception (40), de préférence avec un contour essentiellement concave ou en forme de cuvette en coupe ; et
la structure de crash (16) est agencée au moins partiellement dans l'espace de réception (40).

2. Dispositif selon la revendication 1, dans lequel : le côté extérieur de la structure de crash (16) présente un profilage qui est agencé au moins partiellement dans l'espace de réception (40) et/ou qui s'enfonce dans l'espace de réception (40).

3. Dispositif selon la revendication 2, dans lequel : une portion supérieure et/ou une portion inférieure du panneau latéral (18) présente un profilage qui est en regard d'une portion du profilage de la structure de crash (16), et
la partie du profilage de la structure de crash (16) est aplatie par rapport au profilage restant de la structure de crash (16).

4. Dispositif selon la revendication 1 ou la revendication 2, dans lequel :
l'espace de réception (40) s'étend sensiblement sur toute une longueur du panneau latéral (18) et/ou de la structure de crash (16) ; et/ou
l'espace de réception (40) s'étend sur au moins 40%, 50%, 60%, 70% ou 80% d'une hauteur totale du panneau latéral (18) .

5. Dispositif selon la revendication 1, dans lequel : la structure de crash (16) est réalisée sous la forme d'un panneau pour situation de collision, ou "panneau de crash" ("*Crashbeplankung*" en allemand) ; et/ou la structure de crash (16) est réalisée sous la forme d'un profilé roulé, d'un profilé extrudé ou d'une pièce pressée ; et/ou
la structure de crash (16) est fixée, de préférence vissée, à un boîtier de la réserve d'énergie (14).

6. Dispositif selon l'une des revendications précédentes, dans lequel :
une largeur efficace de la structure de crash (16) est maximale dans une partie sensiblement centrale de la structure de crash (16) et diminue de préférence vers le haut et/ou vers le bas ; et/ou
la structure de crash (16) est renforcée et/ou élargie dans une partie sensiblement centrale de la structure de crash (16) par rapport à une partie supérieure de la structure de crash (16) et/ou une partie inférieure de la structure de crash (16).

7. Dispositif selon l'une des revendications précédentes, dans lequel :
la structure de crash (16) présente plusieurs bandes profilées (24, 26, 28, 30, 32, 34).

8. Dispositif selon la revendication 7, dans lequel au moins une des caractéristiques suivantes est satisfaite :
les plusieurs bandes profilées (24, 26, 28, 30, 32, 34) s'étendent parallèlement les unes aux autres ;
les plusieurs bandes profilées (24, 26, 28, 30, 32, 34) présentent une section transversale en forme de U, en forme de V en forme d'onde ;
les plusieurs bandes profilées (24, 26, 28, 30, 32, 34) sont parallèles, inclinées ou perpendiculaires à un axe longitudinal de la structure de crash (16) ; et
les plusieurs bandes profilées (24, 26, 28, 30, 32, 34) sont au moins partiellement de largeurs différentes.

9. Dispositif selon la revendication 7 ou la revendication 8, dans lequel :
une bande profilée supérieure (24, 26) de la pluralité de bandes profilées (24, 26, 28, 30, 32, 34) est moins large qu'une bande profilée médiane (28, 30) de la pluralité de bandes profilées (24, 26, 28, 30, 32, 34) ; et/ou
une surface de toit, tournée vers le panneau latéral (18), d'une bande profilée supérieure (24, 26) de la pluralité de bandes profilées (24, 26, 28, 30, 32, 34) est inclinée de sorte qu'une largeur de la bande profilée supérieure (24, 26) diminue vers le haut le long d'une direction verticale.

10. Dispositif selon l'une des revendications 7 à 9, dans lequel :
une bande profilée inférieure (32, 34) de la pluralité de bandes profilées (24, 26, 28, 30, 32, 34) est moins large qu'une bande profilée médiane (28, 30) de la pluralité de bandes profilées (24, 26, 28, 30, 32, 34) ; et/ou
une surface de toit, tournée vers le panneau latéral (18), d'une bande profilée inférieure (32, 34) de la pluralité de bandes profilées (24, 26, 28, 30, 32, 34) est inclinée de sorte qu'une largeur de la bande profilée inférieure (32, 34) diminue vers le bas le long d'une direction verticale.

11. Dispositif selon l'une des revendications 7 à 10, dans lequel :
une bande profilée médiane (28, 30) de la pluralité de bandes profilées (24, 26, 28, 30, 32, 34) est la plus large de la pluralité de bandes profilées (24, 26, 28, 30, 32, 34).

12. Dispositif selon l'une des revendications précédentes, dans lequel :
le panneau latéral (18) est renforcé et/ou élargi dans une partie supérieure du panneau latéral (18) et/ou dans une partie inférieure du panneau latéral (18) par rapport à une partie centrale du panneau latéral (18) ; et/ou le panneau latéral (18) est à plusieurs coques, et une coque intérieure (38) du panneau latéral (18) est renforcée et/ou élargie dans une partie supérieure de la coque intérieure (38) et/ou dans une partie inférieure de la coque intérieure (38) par rapport à une partie centrale de la coque intérieure (38).

13. Dispositif selon l'une des revendications précédentes, dans lequel :
le panneau latéral (18) entoure la structure de crash (16) par le bas ; et/ou
le panneau latéral (18) est monté de manière à pouvoir être rabattu vers le bas.

14. Dispositif selon l'une des revendications précédentes, comprenant en outre :
un marchepied (20), de préférence mobile et/ou rabattable, pour monter sur le véhicule automobile (10), le marchepied (20) étant agencé dans un évidement du panneau latéral (18) et/ou dans un évidement de la structure de crash (16).

15. Véhicule automobile (10), de préférence véhicule utilitaire, comprenant :
un essieu avant ;
un essieu arrière ;
un châssis de véhicule (12), de préférence un châssis en échelle ; et
un dispositif selon l'une quelconque des revendications précédentes, ledit dispositif étant agencé entre l'essieu avant et l'essieu arrière et/ou fixé au châssis (12) du véhicule, de préférence au même niveau que l'essieu avant et l'essieu arrière.
